# EUROPÄISCHE PATENTSCHRIFT

(11) **EP 1 478 561 B1**
(45) Veröffentlichungstag und Bekanntmachung des Hinweises auf die Patenterteilung: **04.05.2011**
(21) Anmeldenummer: 03739456.6
(22) Anmeldetag: 05.02.2003
(51) Int. Cl.: B62D 6/04

(54) **VERFAHREN ZUR REGELUNG DER FAHRSTABILITÄT**
METHOD FOR REGULATING DRIVING STABILITY
PROCEDE DE REGULATION DE LA STABILITE DE ROUTE

(30) Priorität: 14.02.2002 DE 10206342; 10.12.2002 DE 10257509; 27.01.2003 DE 10303154
(43) Veröffentlichungstag der Anmeldung: 24.11.2004
(73) Patentinhaber: Continental Teves AG & Co. oHG, 60488 Frankfurt am Main (DE)
(72) Erfinder: GRONAU, Ralph, 35083 Wetter (DE); HERRMANN, Torsten, 60487 Frankfurt/Main (DE); KOST, Artur, 65812 Bad Soden (DE)
(74) Vertreter: Graf, Ulrich
(86) Internationale Anmeldenummer: PCT/EP2003/001123
(87) Internationale Veröffentlichungsnummer: WO 2003/068581

(56) Entgegenhaltungen:
- EP-A- 1 046 571
- WO-A-02/36401
- CA-A- 2 304 545

## Beschreibung

Die Erfindung betrifft ein Verfahren zur Regelung der Fahrstabilität eines Fahrzeugs nach dem Oberbegriff des Anspruchs 1.

Heftige Lenk- und Gegenlenkaktionen bei z.B. Ausweichmanövern, Spurwechseln u. dgl. können bei hohem Reibwert zu Fahrzeuginstabilitäten führen. Bei Fahrzeugen mit hohem Schwerpunkt besteht dabei vermehrt die Gefahr des Umkippens.

Um diesen Fahrzeuginstabilitäten selbsttätig entgegenzuwirken sind eine Vielzahl von Fahrstabilitätsregelungen bekannt geworden. Unter dem Begriff Fahrstabilitätsregelung vereinigen sich fünf Prinzipien zur Beeinflussung des Fahrverhaltens eines Fahrzeugs mittels vorgebbarer Drücke bzw. Bremskräfte in oder an einzelnen Radbremsen und mittels Eingriff in das Motormanagement des Antriebsmotors. Dabei handelt es sich um Bremsschlupfregelung (ABS), welche während eines Bremsvorgangs das Blockieren einzelner Räder verhindern soll, um Antriebsschlupfregelung (ASR), welche das Durchdrehen der angetriebenen Räder verhindert, um elektronische Bremskraftverteilung (EBV), welche das Verhältnis der Bremskräfte zwischen Vorder- und Hinterachse des Fahrzeugs regelt, um eine Kippregelung (ARB), die ein Kippen des Fahrzeugs um seine Längsachse verhindert, sowie um eine Giermomentregelung (ESP), welche für stabile Fahrzustände beim Gieren des Fahrzeugs um die Hochachse sorgt.

Mit Fahrzeug ist also in diesem Zusammenhang ein Kraftfahrzeug mit vier Rädern gemeint, welches mit einer hydraulischen, elektrohydraulischen oder elektro-mechanischen Bremsanlage ausgerüstet ist. In der hydraulischen Bremsanlage kann mittels eines pedalbetätigten Hauptzylinders vom Fahrer ein Bremsdruck aufgebaut werden, während die elektrohydraulischen und elektromechanischen Bremsanlagen eine vom sensierten Fahrerbremswunsch abhängige Bremskraft aufbauen. Im Folgenden wird auf eine hydraulische Bremsanlage bezug genommen. Jedes Rad besitzt eine Bremse, welcher jeweils ein Einlassventil und ein Auslassventil zugeordnet sind. Über die Einlassventile stehen die Radbremsen mit dem Hauptzylinder in Verbindung, während die Auslassventile zu einem drucklosen Behälter bzw. Niederdruckspeicher führen. Schließlich ist noch eine Hilfsdruckquelle vorhanden, welche auch unabhängig von der Stellung des Bremspedals einen Druck in den Radbremsen aufzubauen vermag. Die Einlass- und Auslassventile sind zur Druckregelung in den Radbremsen elektromagnetisch betätigbar.

Zur Erfassung von fahrdynamischen Zuständen sind vier Drehzahlsensoren, pro Rad einer, ein Giergeschwindigkeitsmesser, ein Querbeschleunigungsmesser und mindest ein Drucksensor für den vom Bremspedal erzeugten Bremsdruck vorhanden. Dabei kann der Drucksensor auch ersetzt sein durch einen Pedalweg- oder Pedalkraftmesser, falls die Hilfsdruckquelle derart angeordnet ist, dass ein vom Fahrer aufgebauter Bremsdruck von dem der Hilfsdruckquelle nicht unterscheidbar ist.

Bei einer Fahrstabilitätsregelung wird das Fahrverhalten eines Fahrzeugs derart beeinflusst, dass es für den Fahrer in kritischen Situationen besser beherrschbar wird. Eine kritische Situation ist hierbei ein instabiler Fahrzustand, in welchem im Extremfall das Fahrzeug den Vorgaben des Fahrers nicht folgt. Die Funktion der Fahrstabilitätsregelung besteht also darin, innerhalb der physikalischen Grenzen in derartigen Situationen dem Fahrzeug das vom Fahrer gewünschte Fahrzeugverhalten zu verleihen.

Während für die Bremsschlupfregelung, die Antriebsschlupfregelung und die elektronische Bremskraftverteilung in erster Linie der Längsschlupf der Reifen auf der Fahrbahn von Bedeutung ist, fließen in die Giermomentregelung (GMR) weitere Größen ein, beispielsweise die Gierwinkelgeschwindigkeit und die Schwimmwinkelgeschwindigkeit. Kippregelungen werten in der Regel Querbeschleunigungs- oder Wankgrößen aus (DE 196 32 943 A1).

Wünschenswert wäre es, instabile Fahrsituationen, die vom Fahrer oftmals nicht beherrscht werden, von vornherein zu vermeiden, so dass kritische Fahrsituationen erst gar nicht entstehen können.

Aus der WO 02/36401 A1 ist ein Verfahren für die Vorhersage des Verhaltens eines Kraftfahrzeugs bekannt, das in Abhängigkeit von dem zeitlichen Verlauf der Lenkradwinkelgeschwindigkeit bei einem stabilen Fahrverhalten ermittelt, ob eine Tendenz zu einem nachfolgenden instabilen Fahrverhalten vorliegt, wobei in diesem Fall ein Bremsen-Voreingriff bereits bei stabilem Fahrverhalten erfolgt. Beschrieben wird weiterhin ein Verfahren, das bei extremem Gegenlenken während einer Kurvenfahrt mit hoher Querbeschleunigung stattfindet und bei dem neben dem zeitlichen Verlauf der Lenkradwinkelgeschwindigkeit auch die Querbeschleunigung berücksichtigt wird. Bei extremem Gegenlenken während einer Kurvenfahrt mit hoher Querbeschleunigung werden durch die hohe Querdynamik der Karosserie Wankbewegungen (aus- und einfedern) erzeugt. Das Fahrzeug wird destabilisiert, mit der Gefahr des Kippens um die Längsachse.

Wechseldynamische Fahrmanöver, wie z.B. ein Spurwechsel, stellen fahrdynamisch eine besondere Herausforderung dar, weil zum einen verschiedene Kräfte abzufangen sind (Trägheitskraft des schiebenden Fahrzeugs, Zentrifugalkraft des sich auf einer Kreisbahn befindenden Fahrzeugs) und weil zum anderen die Radbedingungen (Kraftschluss zwischen Reifen und Fahrbahn, Bremsvorgang, Reaktionszeit des Fahrers), unter denen das Fahrmanöver stattfinden kann, zeitlich veränderlich sind. Ausgelöst oder unterstützt werden kann das instabile Fahrverhalten des Fahrzeugs bei den wechseldynamischen Fahrmanövern durch schnelle Lenkbewegungen, die der Fahrer in Rektionen auf erwartetes oder tatsächliches instabiles Fahrverhalten ausführt. Es wäre daher wünschenswert, dem Fahrer alle denkbaren Hilfen zur Verfügung zu stellen, die ihn im Hinblick auf kritische Fahrsituationen unterstützen.

Aus der EP 1046571 Al ist ein gattungsgemäßer Verfahren zur Reduktion der Kippgefahr bekannt, das einen Kippkoeffizienten ermittelt und mit einem Grenzwert vergleicht. Wird der Grenzwert überschritten wird automatisch ein Lenkeingriff eingeleitet.

Der Erfindung liegt die Aufgabe zugrunde, ein Verfahren zur Regelung der Fahrstabilität zu schaffen, welches eine Reaktion auf vorhergesagte instabile Fahrsituationen mittels eines kritische Fahrsituationen abschwächenden oder vermeidenden Eingriffs erlaubt.

Erfindungsgemäß wird diese Aufgabe dadurch gelöst, dass in diesem Fall die Lenkkraft und/oder der Lenkwinkel einer Lenkhandhabe derart korrigiert wird, dass die Lenkkraft und/oder der Lenkwinkel in Abhängigkeit von einem Kennfeld einer Lenkkraftunterstützung (Lenkübersetzung), das die Geschwindigkeit des Fahrzeugs berücksichtigt, modifiziert wird und das Kennfeld in Richtung einer höheren Geschwindigkeit als die tatsächliche Geschwindigkeit des Fahrzeugs eingestellt wird, so dass bei der Betätigung der Lenkhandhabe der Fahrer in Richtung eines untersteuernden Fahrzeugkurses unterstützt wird.

Die Vorhersage der instabilen Fahrsituation kann aus einer stabilen oder instabilen Fahrsituation heraus erfolgen. Das Verfahren nutzt die Korrektur der Lenkkraft und/oder des Lenkwinkels eines Fahrzeugs mit einer Lenkhandhabe, wie einem Lenkrad, dessen durch den Fahrzeugfahrer erzeugte Drehbewegung durch einen Lenkmechanismus in eine Schwenkbewegung der lenkbaren Räder des Fahrzeugs gewandelt wird. Es findet dabei eine Regelung statt, in der der durch den Fahrer erzeugte Lenkwinkel dahingehend überwacht wird, ob durch die Lenkbewegung der Lenkhandhabe ein instabiles Fahrverhalten erzeugt wird. Falls ein instabiles Fahrverhalten durch die Lenkbewegung erzeugt wird oder entstehen kann, wird dem Fahrer durch die Veränderung bzw. Modifikation der Lenkkraft nahegelegt, richtig zu lenken. Dabei kann der Betrag der Servounterstützung gesenkt werden, wenn der Fahrer Lenkbewegungen ausführt, die zu einer instabilen Fahrsituation führen oder eine instabile Fahrsituation verstärken, wenn das Fahrzeug mit einer Servolenkung ausgestattet ist. Bei einem Fahrzeug, das mit einer Hilfskraft- oder Fremdkraftlenkung, z.B. einem elektrisch betätigbaren Lenksystem, ausgestattet ist, kann die Lenkkraft mittels elektrischer Ansteuersignale so verändert werden, dass der Betrag der Hilfskraft zum Beispiel erhöht oder gesenkt wird. Auch kann zusätzlich der Lenkwinkel verändert werden, um eine instabile Fahrsituation zu verhindern.

Vorteilhaft ist, dass beim Anlenken bzw. Einlenken anhand der Amplitude und der Frequenz und gegebenenfalls einem Nulldurchgang des Lenkwinkels mit im wesentlichen unverminderter Lenkwinkelgeschwindigkeit ein Muster ermittelt wird, mittels dem ein instabiles Fahrverhalten vorhergesagt wird.

Wird ein zu erwartendes instabiles Fahrzeugverhalten oder ein erwarteter Zustand aus dem gegenwärtigen Fahrzustand vorhergesagt, wird mittels vorwärts gerichteter Steuerung die Lenkkraft und/oder der Lenkwinkel der Lenkhandhabe modifiziert, z.B. erhöht oder erniedrigt bzw. vergrößert oder verkleinert.

Darüber hinaus kann es zweckmäßig sein, dass die Modifikation der Lenkkraft und/oder des Lenkwinkels in Abhängigkeit von der Zeit, bis das instabile Fahrverhalten eintritt, eingestellt wird.

Weiterhin kann es zweckmäßig sein, dass die Modifikation der Lenkkraft und/oder des Lenkwinkels in Abhängigkeit von einer Kennlinie eingestellt wird.

Um die Fahrsituationen zu ermitteln, ist es vorteilhaft, dass die Größe der Lenkkraft und/oder des Lenkwinkels in Abhängigkeit von einem Fahrspurmodell eingestellt wird. Vorteilhaft wird in dem Fahrspurmodell eine maximale Spurabweichung von der vom Fahrer gewünschten Fahrzeugspur vorgegeben, die gewünschte Fahrspur mit der maximalen Spurabweichung verglichen und beim Unterschreiten der maximalen Spurabweichung die Größe der Lenkkraft und/oder des Lenkwinkels dahingehend reduziert, dass die Korrektur der Lenkkraft bzw. des Lenkwinkels zurückgenommen wird.

Bei wechseldynamischen Fahrmanövern können Fahrzeuge schnell um ihre Längsachse kippen. Diese kippkritischen Situationen bei wechseldynamischen Fahrmanövern können durch entsprechend schnelle Lenkbewegungen erzeugt werden, die der Fahrer in Fahrsituationen ausführt, die in der Regel eine schnelle Reaktion auf das Fahrverhalten des Fahrzeugs erfordern. Zur Verringerung der dabei erzeugten Wankanregung bzw. Wankfrequenz des Fahrzeugs, die zum Kippen führt, ist eine Mustererkennung des kippkritischen Lenkwinkel- bzw. Lenkwinkelgeschwindigkeitssignals vorgesehen.

Wird bei einem Spurwechsel beim ersten Einlenken ein kritisches Muster in Bezug auf Frequenz und Amplitude detektiert und darüber hinaus gegebenenfalls ein Nulldurchgang des Lenkwinkels mit entsprechend unverminderter Lenkwinkelgeschwindigkeit ermittelt, und läßt dieses Muster auf eine Fortführung des Manövers schließen, wird die Charakteristik der Lenkung (Lenkkraft und/oder Lenkwinkel) verändert. Die Veränderung erfolgt bevorzugt in Richtung schwergängig, da einer Vegrößerung des Lenkwinkels (durch eine leichtgängigere Lenkung; höhere Lenkunterstützung) in dieser Situation nicht von so großem Einfluß auf die Fahrsituation ist, da sich das Fahrzeug schon am fahrdynamischen Limit befindet.

Die Beeinflussung der Lenkcharakteristik kann durch eine Umschaltung des Geschwindigkeitskennfeldes (es wird eine höhere Geschwindigkeit angenommen, wie das Fahrzeug tatsächlich fährt) erfolgen. Diese Umschaltung kann in Abhängigkeit von der Nähe der kritischen Situation gesetzt oder nach einer Kennlinie angefahren werden. Bei dem Maß der Veränderung kann nach Vorgabe eines Fahrspurmodells eine maximal Spurabweichung von der vom Fahrer eigentlich gewählten Spur vorgegeben werden, bei der die Beeinflussung ggf. wieder reduziert wird. Diese Beeinflussung kann sowohl bei Servolenkungen (Parameterlenkungen) als auch bei Steer-by-wire Systemen Verwendung finden.

## Patentansprüche

1. Verfahren zur Regelung der Fahrstabilität eines Fahrzeugs, bei dem bei einem stabilen oder instabilen Fahrverhalten ermittelt wird, ob auf Grund eines hochdynamischen Einlenkens eine Tendenz zu einem nachfolgenden instabilen Fahrverhalten vorliegt, **dadurch gekennzeichnet, dass** in diesem Fall die Lenkkraft und/oder der Lenkwinkel einer Lenkhandhabe derart korrigiert wird, dass die Lenkkraft und/oder der Lenkwinkel in Abhängigkeit von einem Kennfeld einer Lenkkraftunterstützung (Lenkübersetzung), das die Geschwindigkeit des Fahrzeugs berücksichtigt, modifiziert wird und das Kennfeld in Richtung einer höheren Geschwindigkeit als die tatsächliche Geschwindigkeit des Fahrzeugs eingestellt wird, so dass bei der Betätigung der Lenkhandhabe der Fahrer in Richtung eines untersteuernden Fahrzeugkurses unterstützt wird.

2. Verfahren nach Anspruch 1, **dadurch gekennzeichnet, dass** beim Anlenken bzw. Einlenken anhand der Amplitude und der Frequenz und gegebenenfalls einem Nulldurchgang des Lenkwinkels mit im wesentlichen unverminderter Lenkwinkelgeschwindigkeit ein Muster ermittelt wird, mittels dem ein instabiles Fahrverhalten vorhergesagt wird.

3. Verfahren nach Anspruch 1 oder 2, **dadurch gekennzeichnet, dass** die Modifikation der Lenkkraft und/oder des Lenkwinkels in Abhängigkeit von der Zeit, bis das instabile Fahrverhalten eintritt, eingestellt wird.

4. Verfahren nach einem der Ansprüche 1 bis 3, **dadurch gekennzeichnet, dass** die Modifikation der Lenkkraft und/oder des Lenkwinkels in Abhängigkeit von einer

5. Verfahren nach einem der Ansprüche 1 bis 4, **dadurch gekennzeichnet, dass** die Größe der Lenkkraft und/oder des Lenkwinkels in Abhängigkeit von einem Fahrspurmodell eingestellt wird.

6. Verfahren nach Anspruch 5, **dadurch gekennzeichnet, dass** in dem Fahrspurmodell eine maximale Spurabweichung von der vom Fahrer gewünschten Fahrzeugspur vorgegeben wird, dass die gewünschte Fahrspur mit der maximalen Spurabweichung verglichen wird und dass beim Unterschreiten der maximalen Spurabweichung die Größe der Lenkkraft und/oder des Lenkwinkels dahingehend reduziert wird, dass die Korrektur der Lenkkraft und/oder des Lenkwinkels zurückgenommen wird.

## Claims

1. Method for regulating the driving stability of a vehicle, in which in the event of a stable or unstable driving behaviour, it is determined whether there is a tendency to a subsequent unstable driving behaviour on the basis of highly dynamic turning in **characterized in that** in this case the steering force and/or the steering angle of a steering handle are/is corrected in such a way that the steering force and/or the steering angle are/is modified as a function of a characteristic diagram of a steering force assistance system (power steering system) which takes into account the speed of the vehicle, and the characteristic diagram is adjusted in the direction of a higher speed than the actual speed of the vehicle, with the result that during the activation of the steering handle the driver is assisted in the direction of an understeering course of the vehicle.

2. Method according to Claim 1, **characterized in that** during the deflection of the steering wheel and/or turning in on the basis of the amplitude and the frequency and, if appropriate, a zero crossover of the steering angle with an essentially unreduced steering angle speed a pattern is determined by means of which an unstable driving behaviour is predicted.

3. Method according to Claim 1 or 2, **characterized in that** the modification of the steering force and/or of the steering angle is adjusted as a function of the time until the unstable driving behaviour occurs.

4. Method according to one of Claims 1 to 3, **characterized in that** the modification of the steering force and/or of the steering angle is adjusted as a function of a characteristic curve.

5. Method according to one of Claims 1 to 4, **characterized in that** the size of the steering force and/or of the steering angle is adjusted as a function of a driving course model.

6. Method according to Claim 5, **characterized in that** in the driving course model a maximum course deviation from the vehicle course desired by the driver is predefined, **in that** the desired driving course is compared with the maximum course deviation, and **in that** when the maximum course deviation is undershot the size of the steering force and/or of the steering angle is reduced to the effect that the correction of the steering force and/or of the steering angle is cancelled out.

## Revendications

1. Procédé de régulation de la stabilité de roulage d'un véhicule dans lequel on détermine en cas de comportement stable ou instable de roulage s'il existe à cause d'une action de braquage fortement dynamique une tendance à un comportement instable ultérieur de roulage,
**caractérisé en ce que**
dans ce cas, la force de braquage et/ou l'angle de braquage d'un actionneur de braquage est corrigée de telle sorte que la force de braquage et/ou l'angle de braquage soient modifiés en fonction d'un champ caractéristique d'une assistance à la force de braquage (conversion de braquage) qui tient compte de la vitesse du véhicule et
**en ce que** le champ caractéristique est formé en direction d'une vitesse plus élevée que la vitesse effective du véhicule, de telle sorte que lorsque l'actionneur de braquage est actionné, le conducteur est soutenu en direction d'une trajectoire en sous-virage.

2. Procédé selon la revendication 1, **caractérisé en ce qu'**en cas de braquage, un motif au moyen duquel un comportement instable de roulage est prédit est déterminé à l'aide de l'amplitude, de la fréquence et éventuellement d'un passage par zéro de l'angle de braquage à une vitesse angulaire de braquage essentiellement non diminuée.

3. Procédé selon les revendications 1 ou 2, **caractérisé en ce que** la modification de la force de braquage et/ou de l'angle de braquage est ajustée en fonction de l'instant auquel le comportement instable de roulage s'établit.

4. Procédé selon l'une des revendications 1 à 3, **caractérisé en ce que** la modification de la force de braquage et/ou de l'angle de braquage est réglée en fonction d'une ligne caractéristique.

5. Procédé selon l'une des revendications 1 à 4, **caractérisé en ce que** le niveau de la force de braquage et/ou de l'angle de braquage est réglé en fonction d'un modèle de trajectoire.

6. Procédé selon la revendication 5, **caractérisé en ce que** le modèle de trajectoire définit un écart maximum par rapport à la trajectoire souhaitée par le conducteur, **en ce que** la trajectoire souhaitée est comparée à l'écart maximum par rapport à la trajectoire et **en ce que** si l'écart maximum par rapport à la trajectoire n'est pas atteint, le niveau de la force de direction et/ou de l'angle de direction est réduit de telle sorte que la correction de la force de direction et/ou de l'angle de direction soit retenue.
